# EUROPEAN PATENT SPECIFICATION

(11) **EP 3 017 691 B1**
(45) Date of publication and mention of the grant of the patent: **31.05.2017**
(21) Application number: 15176455.2
(22) Date of filing: 13.07.2015
(51) Int. Cl.: A01K 5/02

(54) **DEVICE FOR FEEDING FRESH AND INSTANTLY PREPARED MUSH TO PIGLETS**
VORRICHTUNG ZUM FÜTTERN VON FERKELN MIT FRISCHEM UND SOFORT ZUBEREITETEM FLÜSSIGFUTTER
DISPOSITIF POUR ALIMENTER DES PORCELETS AVEC DES ALIMENTS LIQUIDES FRAIS ET INSTANTANÉS

(30) Priority: 11.07.2014 NL 2013169
(43) Date of publication of application: 11.05.2016
(73) Proprietor: Willekens Holding B.V., 5527 BA Hapert (NL)
(72) Inventor: Willekens, Luc Johannes, 5527 BA Hapert (NL)
(74) Representative: Jacobs, Bart

(56) References cited:
- DE-A1-102006 037 082
- DE-U1-202014 101 331
- US-A- 3 352 286

## Description

The present invention relates to a device and method for feeding fresh instantly prepared mush to piglets.

In the pig farming industry large numbers of piglets are generally kept which have to be provided with feed. During the first stage of life the piglets suckle on the sow. After a number of weeks however, the piglets will have to get used to solid feed. In order to facilitate the transition from breast milk to solid feed use is made in the pig farming industry of mush. Within the context of the present invention all pulp-like feed products suitable as a piglet feed are designated as mush.

In view of the large number of piglets the provision of mush is a challenging problem. Use is made in known systems of so-called calf milk mixers or fixed wet feed systems. In these devices the mush base material for the mush is mixed for a time with water, usually mains water, and the mush is stored in large containers.

The known system has a number of drawbacks. More mush is usually prepared and stored than is necessary for one feeding session. The mush remaining in the container can become caked here or can reach incorrect temperatures. The mush can further lose viscosity, homogeneity and/or quality or the mush can spoil, certainly in view of the conditions in the pig pen.

Another drawback is that the mush from the fixed wet feed systems must cover large distances through the wet feed conduits, with product and quality losses as a result. In the case of the calf milk mixers the mush is in an open relation with pen air and other influences after the mixing, with all the consequences this entails for the feed to be dispensed to the piglets.

A device according to the preamble of claim 1 is known from DE 20 2014 101331 U1. Further devices are known from US 3 352 286 A and DE 10 2006 037082 A1.

The present invention provides a device for feeding mush to piglets as defined in claim 1. The device according to the invention comprises here a plurality of wheels to enable displacement of the device, a water reservoir for holding water, a mush base material reservoir for holding mush base material for making the mush, a mixer for mixing the mush base material and water for making mush, a discharge opening for discharging the mush made by the mixer, a first transport device for transporting water from the water reservoir to the mixer, a second transport device for transporting mush base material from the mush base material reservoir to the mixer, a control unit for controlling the first transport device, the second transport device and the mixer and a control member.

The present invention is not limited to the use of water for making mush. Other liquids or combinations of liquids can also be used.

The water reservoir and the mush base material reservoir are preferably closed systems so that contact with the pen air is avoided or limited.

According to the invention the control unit is configured to activate the first transport device, the second transport device and the mixer following operation of the control member, and to deactivate the first transport device, the second transport device and the mixer after subsequent operation of the control member or after a predetermined time following operation of the control member.

In contrast to the known calf milk mixers, the device according to the invention only discharges mush following operation of the control member. There is therefore no storage of mush, the dry mush base material and water only being held separately in reservoirs. These components can be held better separately of each other without running the risk of infection or contamination. It is extremely important for this purpose that the mush base material and the water to be dosed are mixed directly with each other in order to be able to feed a fresh mush to the baby piglets. The mixer preferably has a high capacity, for instance 20-40 litres mush per minute, so that it can operate in extremely labour-efficient manner.

The discharge of mush following operation of a control member provides the option of adapting the quantity of mush to be drawn off to the number of piglets. Both water and mush base material can thus be managed more efficiently. A high dosing accuracy is also hereby achieved. This is impossible with the existing calf milk mixers. In these systems water and mush base material are after all added to each other in an open basin by eye in order to mix a mush.

Applicant has realised that the stated problems of the calf milk mixer and the fixed wet feed systems are solved simultaneously by making use of relatively small reservoirs, whereby the device can be given a mobile form, in combination with the principle of mixing at the moment of demand.

According to the invention, the mixer comprises a hopper which has a large opening on one side for feeding the water and the mush base material and which has a small opening on another side. The mixer further comprises here a vane wheel or blade wheel which is disposed close to the small opening for the purpose of mixing the water and mush base material coming out of the small opening. Because the water is first poured into a hopper instead of directly onto the vane wheel or blade wheel, a swirling or vortex of water results in the hopper. This causes a good mixing of the mush base material and the water even before the mixture comes into contact with the vane wheel or the blade wheel. According to the invention, this is improved with the hopper being provided on the upper side with a conduit system which extends in the peripheral direction of the hopper and which is coupled to the first transport device and which guides water from the water reservoir in the peripheral direction of the hopper and releases water into the hopper in this direction. The conduit system can for instance comprise a plurality of conduit parts which each debouch in the hopper in a peripheral direction thereof. Each conduit part is then connected to the first transport device. The first transport device can for instance comprise a tube or pipe which branches into the different conduit parts. It is also possible for all the conduit parts to be connected to a main conduit situated in the wall of the hopper or coupled thereto, and wherein only the main conduit is coupled to the first transport device. The different injection points for water provide for a continuous vortex in the liquid. The falling mush base material is thus entrained into the vortex, whereby both components are already well mixed before they drop onto the vane wheel or blade wheel. The forming of lumps is hereby prevented or limited and a highly suitable mixing and viscosity of the mush can be obtained.

A further improvement is possible when the control unit is configured to activate the first transport device a predetermined time sooner than the second transport device. This achieves that the swirl of water has already been formed when the mush base material is poured. In similar manner the control unit can be configured to deactivate the first transport device a predetermined time later than the second transport device. This also achieves that the finally poured mush base material is also properly mixed with the water. This also achieves that all the mush base material is flushed out of the hopper in order to guarantee hygiene. The system is hereby also self-cleaning.

The mixer can comprise a mixing chamber in which the vane wheel or blade wheel is disposed rotatably for rotation about a rotation axis, wherein the mixing chamber has an inlet which is connected to the hopper and an outlet which is connected to the discharge opening. The mixer can further comprise a motor, wherein a drive shaft of the motor is connected to the vane wheel or blade wheel. This vane wheel or blade wheel can comprise a plurality of blades. The vane wheel or blade wheel can also comprise a disc which is connected to the drive shaft, and to which disc the plurality of blades is attached.

The mixer can further comprise an adapter between the small opening of the hopper and the inlet of the mixing chamber, which adapter is configured to feed the mush base material and water to the mixing chamber in a direction substantially parallel to the rotation axis. The blades usually protrude radially here relative to the rotation axis and are disposed in order to impinge on the water and mush base material in a direction perpendicularly of the rotation axis. It is thus possible to embody the blades as plate-like parts placed perpendicularly of the disk connected to the drive shaft. This specific arrangement results in an optimal mixing of water and mush base material for the purpose of forming homogenous fresh mush.

The hopper is preferably disposed substantially vertically and the rotation axis preferably extends substantially horizontally. The inlet of the mixing chamber, at least in normal use of the device, is situated here above the outlet of the mixing chamber. This arrangement makes it possible for gravitational force to enhance the process of moving the mush in the mixing chamber in the direction of the outlet.

The mush base material reservoir can be provided on an underside with an opening, wherein the second transport device comprises a motor and a worm screw connected to the motor for the purpose of transporting the mush base material from the opening of the mush base material reservoir to the mixer. In normal use the opening in the mush base material reservoir is preferably placed lower than the large opening of the hopper. This makes dosed dispensing of mush base material easier. Contamination of the second transport device is also avoided. After all, water cannot enter.

The first transport device can comprise a conduit system for guiding water from the water reservoir to the mixer and an electric pump for pumping water through the conduit system. The water reservoir can also be provided with an opening on the underside of the reservoir which is connected to the conduit system. In normal use such an opening is preferably placed lower than the large opening of the hopper. The conduit system can optionally be provided with non-return valves so as to prevent water flowing back into the reservoir. Non-return valves in the conduit system in the direction of the hopper are also installed so that the water can be stopped immediately and possible dripping hereby prevented. This enhances hygiene.

The water reservoir can comprise a heating element for heating the water in the water reservoir. The water reservoir can also comprise insulation for thermal insulation of the water reservoir. This guarantees a correct temperature of the fresh mush.

The water reservoir can comprise a temperature sensor coupled to the control unit, wherein the control unit is configured to control the heating element such that the temperature of the water in the water reservoir rises to at least a first temperature and is held at least at this temperature for a first predetermined period of time. The first temperature lies for instance in the range between 65 and 75 degrees Celsius or another temperature for sterilizing the water in the water reservoir. The first predetermined period of time, which can preferably be set by the user, is also selected such that a sufficient degree of sterility of the water is obtained. This prevents the risk of infection to the piglets.

The control unit can be configured to activate the heating element in order to reach the first temperature in the water reservoir subject to a time or interval adjustable by a user. The heating element usually comprises heating coils which are activated by directing electric current through the coils. Prior to activation such a current is not directed through the heating element.

The control unit can be configured to control the heating element such that after the first predetermined period of time the water cools to at least a second temperature. This temperature, which is preferably adjustable by a user and generally lies in the range between 50 and 65 degrees Celsius, is sufficient to achieve that the temperature of the mush lies between 35 and 40 degrees Celsius when it is consumed by the piglets. This is a pleasant ingestion temperature for the piglets.

The control unit can further be configured to control the heating element such that, after reaching the second temperature, the temperature is held at this temperature for a second predetermined period of time. Cooling from the first temperature to the second temperature is generally achieved by deactivating the heating element so that the second temperature is reached through cooling. However, once this temperature has been reached, it is possible to opt to maintain this temperature by activating the heating element. If however the device is about to be used at that moment to feed piglets, this step can be omitted.

The control unit can be configured to stop the heating element heating the water in the water reservoir a predetermined period of time after activation of the heating element, after reaching the first temperature or reaching the second temperature.

The control unit can be configured to calculate a time at which the control unit begins activating the heating element in order to reach the first temperature on the basis of the time or interval adjustable by the user, the first predetermined period of time, a time necessary to heat a water reservoir filled with water to the first temperature and a time necessary to cool the water from the first temperature to the second temperature. The time or interval adjustable by the user can for instance correspond to a moment of discharge of the mush desired by the user. Suppose that the user wishes to feed at 09:00 and that the device needs three hours to heat the water to the first temperature and needs two hours to cool to the second temperature, the control unit then has to activate the heating element at 04:00. The temperature of the mush will in that case be optimal when discharged. Nor in this case does the water need to be heated in order to maintain the second temperature, whereby energy can be saved.

The device can comprise an electricity connection for connecting the device to mains electricity for the purpose of receiving electrical energy intended to supply power to at least one of the control unit, the first transport device, the second transport device, the mixer and the heating element. The device can further comprise a water connection for supplying water to the water reservoir from outside. The device can further comprise here a preferably adjustable float for determining a degree of filling of the water reservoir. The user can then prevent the water reservoir being filled with too much water by adjusting the float, whereby a considerable quantity of water would remain behind in the reservoir after feeding of the piglets, with all the possible health risks.

The mobile device is preferably placed at a fixed location in or outside the pig accommodation when it is not being used for feeding. A socket outlet and water connection are preferably present at this location. The control unit can be configured here to detect uncoupling of the device, for instance because a mechanical coupling is broken. After the device has been uncoupled from the location, the device is once again connected to the mains electricity in the vicinity of the piglets for the purpose of discharging fresh mush. The present invention does not preclude the use of batteries, although they are not recommended in view of the location at which they are applied and the hygienic problems associated with the use of batteries in an environment rich in ammonia.

When the control unit has detected an uncoupling, it can be decided not to power the heating element during a subsequent connection to the mains electricity since the device is at that moment being used for feeding. When the insulation is sufficient, the temperature of the discharged mush will not fall considerably. If a mechanical coupling is detected, for instance after feeding of the piglets, it can be decided to activate the heating element again. It is however possible to also work with the above stated times or intervals of desired feeding moments. Herein is also disclosed but not claimed a method for feeding mush to piglets which are grouped in a plurality of groups of piglets placed at mutual distance. The method comprises the steps of a) providing a device as defined above, b) filling the water reservoir with the water, c) filling the mush base material reservoir with the mush base material, d) displacing the device to a group of piglets from the plurality of groups of piglets, e) placing a receptacle close to the discharge opening, f) operating the control member for discharging mush and receiving the mush in the receptacle, g) feeding the mush to the group of piglets, and h) repeating steps d) - g) for the other groups of piglets of the plurality of groups of piglets.

The method can further comprise of setting a desired feeding time or feeding interval prior to step d) and of first performing step d) at or almost at the desired feeding time or after the feeding interval has elapsed. The method can further comprise of uncoupling the electricity connection and water connection prior to step d), connecting the electricity connection to an electricity supply in the vicinity of the groups of piglets for feeding prior to step e) or f) and uncoupling the electricity connection after step f) or g).

The invention will be discussed in more detail hereinbelow with reference to the accompanying figures, in which:
- Figure 1: shows a schematic view of an embodiment of the present invention;
- Figure 2: shows a cross-section of the embodiment of figure 1; and
- Figure 3: shows a cross-section of the mixer of the embodiment of figure 1.

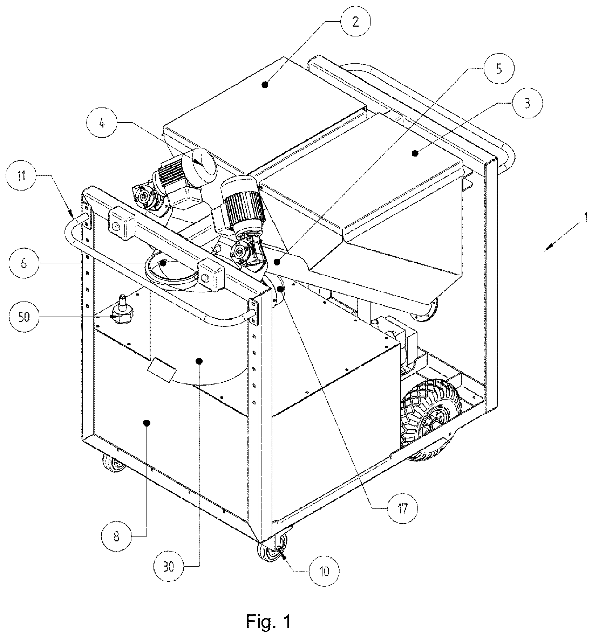

Device 1 shown in figure 1 comprises two reservoirs 2, 3 for mush base material. This makes it possible if desired to make two different types of mush. In order to be able to guarantee gradual transition between the different types of mush the user can immediately opt to mix both types of mush per feeding session in a proportion desired by the user. Abrupt transitions in feed for the piglets can thus be avoided on the basis of the necessity in the accommodation. Shown for reservoir 2 is a motor 4 which drives a worm screw 5 for the purpose of transporting mush base material. Such an arrangement is also possible for reservoir 3.

Worm screw 5 transports mush base material to a mixer which comprises a hopper 6. The mixer further comprises a motor 17 for rotating a vane wheel or blade wheel so as to thus mix water from water reservoir 8 with the mush base material. Water can be filled here by means of water connection 9. Device 1 can travel on swivel wheels 10 and/or rubber wheels. Device 1 is provided for this purpose with push bars 11.

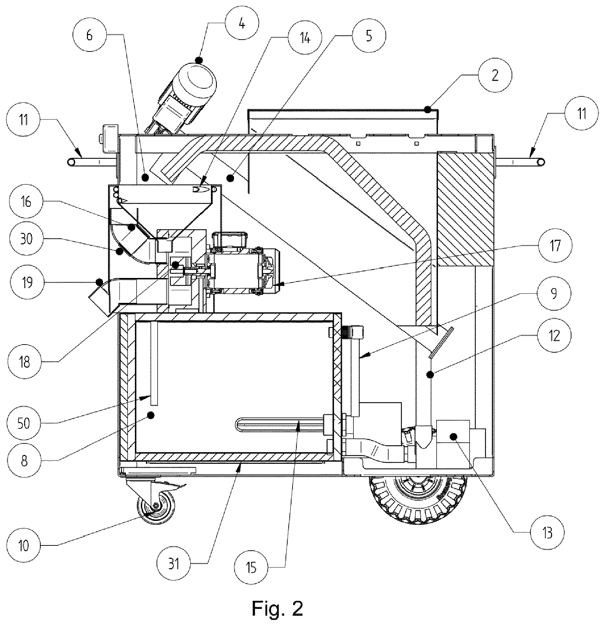

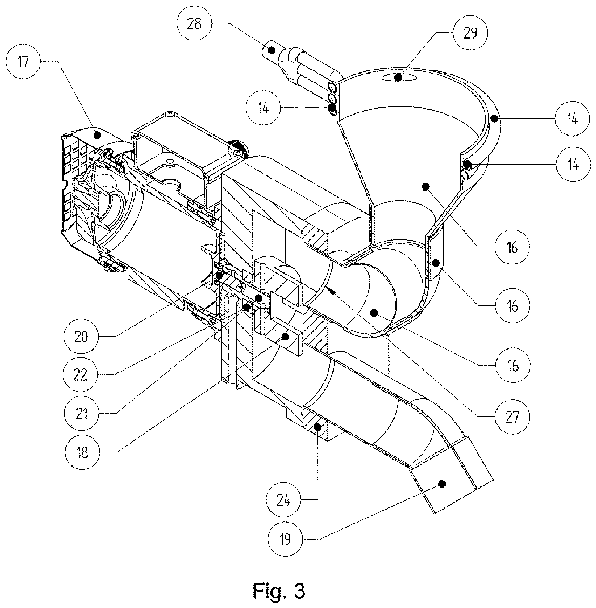

The cross-section of figure 2 shows a conduit system 12 with a pump 13 which pumps water from reservoir 8 upward to hopper 6. A tube of conduit system 12 is connected here to a conduit system 14 in hopper 6 which is shown in more detail in figure 3. Also shown is a heating element 15 which can heat and/or sterilize the water in reservoir 8. Reservoir 8 further comprises a temperature sensor (not shown). In addition, water reservoir 8 is provided with a preferably adjustable float 50, wherein the temperature sensor can be received in float 50. This has the advantage that the user can adjust how much water can be admitted into water reservoir 8 during filling. This enhances hygiene because it enables the user to match the quantity of water to the anticipated use, whereby accumulation of water from previous days can be avoided.

The mush base material and water fed to hopper 6 is supplied through conduit 16 to a blade wheel 18 which is driven by a motor 17 and which mixes mush base material and water into fresh mush and discharges it via discharge 19.

The mixer of device 1 is shown in more detail in figure 3. Motor 17 comprises a drive shaft 20 which is connected to a sleeve 21 which is bearing-mounted by bearings 22. Bearings 22 are mounted here in a housing 23. A housing 23 further comprises a mixing chamber 24 in which blade wheel 18 is rotatably mounted. Sleeve 23 is attached to a disc 25 on which blades 26 are mounted. It will be apparent how water is supplied at inlet 27 in a direction parallel to the rotation axis of disc 25.

Shown on the upper side is a connection 28 with which tubes of conduit system 14 in the war of hopper 6 are connected to conduit system 12. These tubes each comprise an opening 29 which releases water in the peripheral direction of hopper 6. Hopper 6 preferably comprises here a number of such tubes and openings, such as three or more.

A control unit 30, see figures 1 and 2, is configured to control heating element 15, pump 13, motor 4 and motor 17.

The operation of device 1 can be specified as follows. During a period of non-use device 1 is generally placed at a fixed location in the pig accommodation. Here device 1 is connected to the mains water by means of water connection 9. Device 1 is further provided with electrical energy by means of an electrical connection (not shown). The user can now, if necessary, fill reservoir 2, 3 with mush base material and fill reservoir 8 with water.

The user can program control unit 30 so that it ensures that device 1 is ready to make mush at for instance 09:00. Control unit 30 will hereby activate heating element 15 at around 04:00 by directing electric current through this element. The temperature of the water in reservoir 8 will consequently rise to 70 degrees Celsius. This temperature will then be maintained for a predetermined period of time. Control unit 30 makes use here of a feedback subject to a temperature measured by the temperature sensor. Bacteria in the water will be killed by the high temperature. This prevents the risk of infection to piglets.

Once the period of time has elapsed, control unit 30 ceases directing current through heating element 15. The water in reservoir 8 hereby cools, albeit slowly because of insulation 31. This process has to be controlled such that at around 09:00 the water has a temperature of about 55 degrees Celsius.

The user can then uncouple device 1 from the mains electricity and the mains water. Using wheels 10 the user will then displace device 1 to the first group of piglets in the accommodation. An accommodation generally comprises a central passageway to which the nursery pens are connected in transverse direction in which a sow with a plurality of piglets, or only a group of piglets, are located. Usually available at each nursery pen is an electricity connection to which device 1 can be connected. The device thus remains in the central passageway in front of the nursery pens in order to prevent cross-infection to other nursery pens via the device.

At the first nursery pen the user will connect device 1 to the mains electricity and the user will subsequently take a receptacle which is placed under discharge 19. The user then operates a control member (not shown), such as a button, which instructs control device 30 to first activate pump 13 for the purpose of generating a water vortex in hopper 6. After a short period, for instance three seconds, control unit 30 activates motor 4 for feeding a correct quantity of mush base material to hopper 6. Mush base material 6 falls here through the large opening of hopper 6 onto the water vortex. This results in a first mixing of mush base material and water. The mixture then falls through the small opening of hopper 6 and through tube 16 onto a rotating blade wheel 18. The control unit has already activated motor 17 for this purpose, for instance at the time pump 13 was activated.

Blade wheel 18 mixes the mush base material and the clean water into a fresh mush. The fresh mush is then released through discharge 19 and is received by the receptacle. The process of making mush stops a predetermined period after the user has operated the control member or after the user operates the control member again or after the user ceases to operate the control member. Control unit 30 deactivates motor 4 for this purpose. Some time later, for instance three seconds, control unit 30 likewise stops pump 13 and motor 17. The hopper and the mixer are hereby properly flushed with hot water, whereby hygiene is improved and the system is self-cleaning.

The user can then take the collected mush to a group of piglets. After the user returns to device 1, it is uncoupled from the mains electricity and device 1 is moved to a subsequent nursery pen and the cycle can be repeated. Once all groups of piglets have been provided with mush, device 1 is returned to the storage location and connected to the mains water and the mains electricity. The above described method can then be repeated.

The device is preferably given a modular configuration to enable simple maintenance to be performed. Components which are crucial or susceptible to wear are easily replaceable here from outside.

It will be apparent that different changes to the above described embodiments are possible without departing from the scope of protection of the invention, which is defined by the following claims.

## Claims

1. Device (1) for feeding mush to piglets, comprising:
a plurality of wheels (10) to enable displacement of the device;
a water reservoir (8) for holding water;
a mush base material reservoir (2, 3) for holding mush base material for making the mush;
a mixer (17, 20, 24, 26) for mixing the mush base material and water for making mush;
a discharge opening (19) for discharging the mush made by the mixer;
a first transport device (12, 13) for transporting water from the water reservoir to the mixer;
a second transport device (4, 5) for transporting mush base material from the mush base material reservoir to the mixer;
a control unit (30) for controlling the first transport device, the second transport device and the mixer; and
a control member ;
wherein the control unit is configured to:
activate the first transport device, the second transport device and the mixer following operation of the control member;
deactivate the first transport device, the second transport device and the mixer after subsequent operation of the control member or after a predetermined time following operation of the control member;
wherein the mixer comprises a hopper (6) which has a large opening on one side for feeding the water and the mush base material and which has a small opening on another side, wherein the mixer further comprises a vane wheel or blade wheel (18) which is disposed close to the small opening for the purpose of mixing the water and mush base material coming out of the small opening;
**characterized in that** the hopper is provided on the upper side with a conduit system (14) which extends in the peripheral direction of the hopper and which is coupled to the first transport device and which guides water from the water reservoir in the peripheral direction of the hopper and releases water into the hopper in this direction.

2. Device as claimed in claim 1, wherein the control unit is configured to activate the first transport device a predetermined time sooner than the second transport device and/or wherein the control unit is configured to deactivate the first transport device a predetermined time later than the second transport device.

3. Device as claimed in claim 1 or 2, wherein the mixer comprises a mixing chamber (24) in which the vane wheel or blade wheel is disposed rotatably for rotation about a rotation axis, wherein the mixing chamber has an inlet which is connected to the hopper and an outlet which is connected to the discharge opening.

4. Device as claimed in claim 3, wherein the mixer comprises a motor (17), wherein a drive shaft (20) of the motor is connected to the vane wheel or blade wheel.

5. Device as claimed in claim 4, wherein the vane wheel or blade wheel comprises a plurality of blades (26).

6. Device as claimed in claim 5, wherein the vane wheel or blade wheel comprises a disc (25) which is connected to the drive shaft, and to which disc the plurality of blades is attached.

7. Device as claimed in any of the claims 3-6, wherein the mixer further comprises an adapter (16) between the small opening of the hopper and the inlet of the mixing chamber, which adapter is configured to feed the mush base material and water to the mixing chamber in a direction substantially parallel to the rotation axis.

8. Device as claimed in any of the claims 3-7, wherein the hopper is disposed substantially vertically and the rotation axis extends substantially horizontally, and wherein the inlet of the mixing chamber, at least in normal use of the device, is situated above the outlet of the mixing chamber.

9. Device as claimed in any of the foregoing claims, wherein the mush base material reservoir is provided on an underside with an opening, and wherein the second transport device comprises a motor (4) and a worm screw (5) connected to the motor for the purpose of transporting the mush base material from the opening of the mush base material reservoir to the mixer.

10. Device as claimed in any of the foregoing claims, wherein the first transport device comprises a conduit system (12) for guiding water from the water reservoir to the mixer and an electric pump (13) for pumping water through the conduit system.

11. Device as claimed in any of the foregoing claims, wherein the water reservoir comprises a heating element (15) for heating the water in the water reservoir.

12. Device as claimed in claim 11, wherein the water reservoir comprises insulation for thermal insulation (31) of the water reservoir.

13. Device as claimed in claim 11 or 12, wherein the water reservoir comprises a temperature sensor coupled to the control unit, and wherein the control unit is configured to control the heating element such that the temperature of the water in the water reservoir rises to at least a first temperature and is held at least at this temperature for a first predetermined period of time.

## Patentansprüche

1. Vorrichtung (1) zum Füttern von Ferkeln mit Brei, umfassend:
eine Vielzahl von Rädern (10), um ein Verschieben der Vorrichtung zu ermöglichen,
einen Wasservorratsbehälter (8) zum Aufnehmen von Wasser,
einen Breiausgangsmaterial-Vorratsbehälter (2, 3) zum Aufnehmen von Breiausgangsmaterial, um den Brei herzustellen,
einen Mischer (17, 20, 24, 26) zum Mischen des Breiausgangsmaterials und Wasser zur Herstellung des Breis,
eine Abführöffnung (19) zum Abführen des durch den Mischer hergestellten Breis,
eine erste Transportvorrichtung (12, 13) zum Transportieren von Wasser aus dem Wasservorratsbehälter zu dem Mischer,
eine zweite Transportvorrichtung (4, 5) zum Transportieren von Breiausgangsmaterial aus dem Breiausgangsmaterial-Vorratsbehälter zu dem Mischer,
eine Steuereinheit (30) zum Steuern der ersten Transportvorrichtung, der zweiten Transportvorrichtung und des Mischers,
und ein Steuerungsglied,
wobei die Steuereinheit konfiguriert ist,
um die erste Transportvorrichtung, die zweite Transportvorrichtung und den Mischer auf eine Betätigung des Steuerungsgliedes hin zu aktivieren,
um die erste Transportvorrichtung, die zweite Transportvorrichtung und den Mischer auf eine anschließende Betätigung des Steuerungsgliedes hin oder nach einer bestimmten Zeitspanne auf die Betätigung des Steuerungsgliedes hin zu deaktivieren,
wobei der Mischer einen Trichter (6) umfasst, der eine große Öffnung auf einer Seite zur Zuführung des Wassers und des Breiausgangsmaterials und eine kleine Öffnung auf einer anderen Seite aufweist,
wobei der Mischer ferner ein Flügelrad oder Schaufelrad (18) umfasst, welches nahe der kleinen Öffnung zum Zwecke des Mischens des aus der kleinen Öffnung austretenden Wassers und Breiausgangsmaterials angeordnet ist,
**dadurch gekennzeichnet, dass** der Trichter auf der oberen Seite mit einer Leitungsanordnung (14) versehen ist, die in der Umfangsrichtung des Trichters verläuft und die mit der ersten Transportvorrichtung gekoppelt ist und Wasser aus dem Wasservorratsbehälter in die Umfangsrichtung des Trichters leitet und Wasser in dieser Richtung in den Trichter freigibt.

2. Vorrichtung nach Anspruch 1, wobei die Steuereinheit konfiguriert ist, um die erste Transportvorrichtung eine bestimmte Zeit früher als die zweite Transportvorrichtung zu aktivieren, und/oder wobei die Steuereinheit konfiguriert ist, um die erste Transportvorrichtung eine bestimmte Zeit später als die zweite Transportvorrichtung zu deaktivieren.

3. Vorrichtung nach Anspruch 1 oder 2, wobei der Mischer eine Mischkammer (24) umfasst, in der das Flügelrad oder Schaufelrad zur Drehung um eine Drehachse drehbar angeordnet ist,
wobei die Mischkammer einen mit dem Trichter verbundenen Einlass und einen mit der Abführöffnung verbundenen Auslass aufweist.

4. Vorrichtung nach Anspruch 3, wobei der Mischer einen Motor (17) umfasst, wobei eine Antriebswelle (20) des Motors mit dem Flügelrad oder Schaufelrad verbunden ist.

5. Vorrichtung nach Anspruch 4, wobei das Flügelrad oder Schaufelrad eine Vielzahl von Flügeln bzw. Schaufeln (26) umfasst.

6. Vorrichtung nach Anspruch 5, wobei das Flügelrad oder Schaufelrad eine mit der Antriebswelle verbundene Scheibe (25) umfasst, an der die Vielzahl von Flügeln bzw. Schaufeln befestigt ist.

7. Vorrichtung nach Anspruch 3 bis 6, wobei der Mischer ferner zwischen der kleinen Öffnung des Trichters und dem Einlass der Mischkammer einen Adapter (16) umfasst, der gestaltet ist, um das Breiausgangsmaterial und Wasser der Mischkammer in einer im Wesentlichen parallel zu der Drehachse verlaufenden Richtung zuzuführen.

8. Vorrichtung nach einem der Ansprüche 3 bis 7, wobei der Trichter im Wesentlichen vertikal angeordnet ist,
wobei die Drehachse im Wesentlichen horizontal verläuft
und wobei der Einlass der Mischkammer zumindest bei normalem Gebrauch der Vorrichtung sich oberhalb des Auslasses der Mischkammer befindet.

9. Vorrichtung nach einem der vorhergehenden Ansprüche, wobei der Breiausgangsmaterial-Vorratsbehälter an einer Unterseite mit einer Öffnung versehen ist
und wobei die zweite Transportvorrichtung einen Motor (4) und eine mit dem Motor zum Zwecke des Transportierens des Breiausgangsmaterials von der Öffnung des Breiausgangsmaterial-Vorratsbehälters zu dem Mischer verbundene Förderschnecke (5) umfasst.

10. Vorrichtung nach einem der vorhergehenden Ansprüche, wobei die erste Transportvorrichtung eine Leitungsanordnung (12), um Wasser aus dem Wasservorratsbehälter zu dem Mischer zu leiten, und eine elektrische Pumpe (13) umfasst, um Wasser durch die Leitungsanordnung zu pumpen.

11. Vorrichtung nach einem der vorhergehenden Ansprüche, wobei der Wasservorratsbehälter ein Heizelement (15) umfasst, um Wasser in dem Vorratsbehälter zu erwärmen.

12. Vorrichtung nach Anspruch 11, wobei der Vorratsbehälter eine Isolierung zum thermischen Isolieren (31) des Wasservorratsbehälters umfasst.

13. Vorrichtung nach Anspruch 11 oder 12, wobei der Wasservorratsbehälter einen mit der Steuereinheit gekoppelten Temperatursensor umfasst
und wobei die Steuereinheit konfiguriert ist, um das Heizelement derart zu steuern, dass die Temperatur des Wassers in dem Wasservorratsbehälter auf zumindest eine erste Temperatur steigt und bei zumindest dieser Temperatur während einer ersten bestimmten Zeitspanne gehalten wird.

## Revendications

1. Dispositif (1) pour alimenter des porcelets avec de la bouillie, comprenant :
une pluralité de roues (10) pour permettre le déplacement du dispositif ;
un réservoir d'eau (8) pour contenir de l'eau ;
un réservoir de matériau de base de bouillie (2, 3) pour contenir un matériau de base de bouillie pour faire la bouillie ;
un mélangeur (17, 20, 24, 26) pour mélanger le matériau de base de bouillie et de l'eau pour faire de la bouillie ;
une ouverture d'évacuation (19) pour évacuer la bouillie faite par le mélangeur ;
un premier dispositif de transport (12, 13) pour transporter l'eau du réservoir d'eau jusqu'au mélangeur ;
un second dispositif de transport (4, 5) pour transporter le matériau de base de bouillie depuis le réservoir de matériau de base de bouillie jusqu'au mélangeur ;
une unité de commande (30) pour commander le premier dispositif de transport, le second dispositif de transport et le mélangeur ; et
un élément de commande ;
dans lequel l'unité de commande est configurée pour :
activer le premier dispositif de transport, le second dispositif de transport et le mélangeur suivant l'actionnement de l'élément de commande ;
désactiver le premier dispositif de transport, le second dispositif de transport et le mélangeur après actionnement ultérieur de l'élément de commande ou après un temps prédéterminé suivant l'actionnement de l'élément de commande ;
dans lequel le mélangeur comprend une trémie (6) qui présente une grande ouverture sur un côté pour fournir l'eau et le matériau de base de bouillie et qui présente une petite ouverture sur un autre côté, dans lequel le mélangeur comprend en outre une roue à aubes ou une roue à pales (18) qui est disposée près de la petite ouverture dans le but de mélanger l'eau et le matériau de base de bouillie sortant de la petite ouverture ;
**caractérisé en ce que** la trémie est dotée, sur le côté supérieur, d'un système de conduites (14) qui s'étend dans la direction périphérique de la trémie et qui est couplé au premier dispositif de transport et qui guide l'eau du réservoir d'eau dans la direction périphérique de la trémie et libère l'eau dans la trémie dans cette direction.

2. Dispositif selon la revendication 1, dans lequel l'unité de commande est configurée pour activer le premier dispositif de transport à un moment prédéterminé plus tôt que le second dispositif de transport et/ou dans lequel l'unité de commande est configurée pour désactiver le premier dispositif de transport à un moment prédéterminé plus tard que le second dispositif de transport.

3. Dispositif selon la revendication 1 ou 2, dans lequel le mélangeur comprend une chambre de mélange (24), dans laquelle la roue à aubes ou la roue à pales est disposée de manière rotative pour la rotation autour d'un axe de rotation, dans lequel la chambre de mélange présente une entrée qui est reliée à la trémie et une sortie qui est reliée à l'ouverture d'évacuation.

4. Dispositif selon la revendication 3, dans lequel le mélangeur comprend un moteur (17), dans lequel un arbre d'entraînement (20) du moteur est relié à la roue à aubes ou roue à pales.

5. Dispositif selon la revendication 4, dans lequel la roue à aubes ou la roue à pales comprend une pluralité de pales (26).

6. Dispositif selon la revendication 5, dans lequel la roue à aubes ou la roue à pales comprend un disque (25) qui est relié à l'arbre d'entraînement, et auquel disque la pluralité de pales est attachée.

7. Dispositif selon l'une quelconque des revendications 3 à 6, dans lequel le mélangeur comprend en outre un adaptateur (16) entre la petite ouverture de la trémie et l'entrée de la chambre de mélange, lequel adaptateur est configuré pour alimenter la chambre de mélange avec le matériau de base de bouillie et l'eau dans une direction sensiblement parallèle à l'axe de rotation.

8. Dispositif selon l'une quelconque des revendications 3 à 7, dans lequel la trémie est disposée sensiblement verticalement et l'axe de rotation s'étend sensiblement horizontalement, et dans lequel l'entrée de la chambre de mélange, au moins en utilisation normale du dispositif, est située au-dessus de la sortie de la chambre de mélange.

9. Dispositif selon l'une quelconque des revendications précédentes, dans lequel le réservoir de matériau de base de bouillie est doté, sur un côté inférieur, d'une ouverture, et dans lequel le second dispositif de transport comprend un moteur (4) et une vis sans fin (5) reliée au moteur dans le but de transporter du matériau de base de bouillie depuis l'ouverture du réservoir de matériau de base de bouillie jusqu'au mélangeur.

10. Dispositif selon l'une quelconque des revendications précédentes, dans lequel le premier dispositif de transport comprend un système de conduites (12) pour guider l'eau depuis le réservoir d'eau jusqu'au mélangeur et une pompe électrique (13) pour pomper l'eau à travers le système de conduites.

11. Dispositif selon l'une quelconque des revendications précédentes, dans lequel le réservoir d'eau comprend un élément chauffant (15) pour chauffer l'eau dans le réservoir d'eau.

12. Dispositif selon la revendication 11, dans lequel le réservoir d'eau comprend une isolation pour l'isolation thermique (31) du réservoir d'eau.

13. Dispositif selon la revendication 11 ou 12, dans lequel le réservoir d'eau comprend un capteur de température couplé à l'unité de commande, et dans lequel l'unité de commande est configurée pour commander l'élément chauffant de telle sorte que la température de l'eau dans le réservoir d'eau augmente à au moins une première température et est maintenue au moins à cette température pour une première période de temps prédéterminée.
